# EUROPEAN PATENT SPECIFICATION

(11) **EP 1 155 780 B1**
(45) Date of publication and mention of the grant of the patent: **16.08.2006**
(21) Application number: 01500108.4
(22) Date of filing: 20.04.2001
(51) Int. Cl.: B24B 41/04, B24B 49/00, B23Q 5/28, B23Q 17/22, B24B 47/10, B23Q 1/28, B23Q 1/52

(54) **Grinding machine with direct drive rotary wheelhead**
Schleifmaschine mit drehbarer Spindel mit Direktantrieb
Rectifieuse à broche rotative à entraînement direct

(30) Priority: 17.05.2000 ES 200001227
(43) Date of publication of application: 21.11.2001
(73) Proprietor: Danobat, S. Coop, 20870 Elgoibar (Guipuzcoa) (ES)
(72) Inventor: De Luis Vizcaino, Elias, 20870 Elagoibar (Gipuzkoa) (ES)
(74) Representative: Evens, Paul Jonathan

(56) References cited:
- EP-A- 0 796 700
- US-A- 4 557 645
- US-A- 5 584 621

## Description

### TECHNICAL FIELD

The present invention relates to grinding machines, and more specifically to systems for turning wheelheads on grinding machines.

### PRIOR ART

Machine tools with a wheelhead that can be turned in order to change the wheel or to alter the alignment of the wheel in relation to the workpiece are already known. An example of such a machine is disclosed in US-A-5 584 621, which shows the machine according to the preamble of claim 1.

The devices in existence hitherto have consisted of worm wheel gear type drive systems, indirect mechanical drives of the connecting rod-crank type combined with screw systems, belt drive systems, and a wide variety of combinations of these types of components.

Worm wheel gear drive systems achieve a very high reduction, which facilitates their application but at the expense of a low efficiency and a positioning that is not particularly precise, unless the mechanical quality of its components is very high and therefore expensive.

Furthermore, indirect systems of the connecting rod-crank type combined with screw systems provide good precision but they are limited in respect of the possible turning angle.

There is also a wide variety of plates that use front teeth for positioning purposes. This system provides optimum precision at low cost, but with the limitation of the positions obtainable, as in these cases the maximum number of positions that may be obtained is the same as the number of teeth in the front toothing system.

To try to overcome this problem, the latest trend in technology has come up with systems that combine both drive systems, a classic one with a front toothing system, and another added to the previous one with turn restricted to the inter-tooth angle of the former, which enables it to achieve any position between two fixed front toothing angles.

There are systems for turning the wheelhead by means of continuous positioning, but they are based on complex mechanical systems and require high-precision manufacture.

### DISCLOSURE OF THE INVENTION

The object of the invention is to provide a grinding machine with a direct drive rotary wheelhead, as defined in the claims.

The machine of the invention has a high torque motor housed inside the wheelhead, which rotates said wheelhead directly, and an encoder for detecting the angular position of the wheelhead, also housed inside the wheelhead.

The invention also includes means for wheelhead rotation locking, said means enabling the position reached to be maintained without having the motor in operation.

By means of combining a high torque motor and a high precision and resolution encoder, both housed in the wheelhead, such precision is achieved that the wheel diamondizing is not required after a turn of the wheelhead.

In this way, a rotary wheelhead system is obtained that has the following advantages:
- High precision is obtained with the use of a system of mechanics much simpler than others used in the prior art for obtaining the same precision.
- A single drive is used versus systems in which two different drives are combined.
- The fact that the system is built into the wheelhead provides a compact rigid assembly, in which space saving is also achieved.

### DESCRIPTION OF THE DRAWING

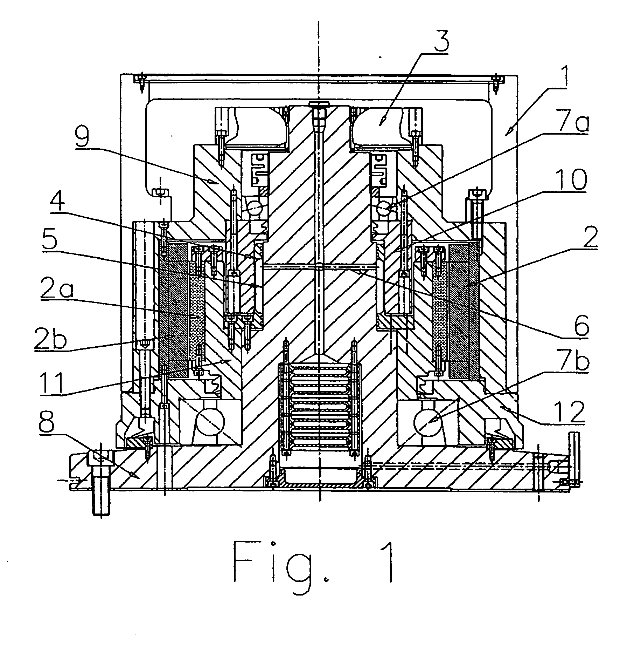

FIG. 1 is a front view of an embodiment of the system for turning the wheelhead according to the invention.

### DETAILED DISCLOSURE OF THE INVENTION

With reference to FIG. 1, the system for turning the wheelhead 1 includes:
- a high torque motor 2 housed in the wheelhead 1, which rotates said wheelhead 1 directly in respect of a support shaft 8,
- a rotary encoder 3 for detecting the angular position of the wheelhead 1, also housed in said wheelhead 1,
- hydraulic locking means of great torsional stiffness to maintain the position reached by the wheelhead 1 without the need to have the motor 2 in operation, and
- a pair of preloaded angular contact bearings 7a and 7b, which make the rotation of the wheelhead 1 possible.

Support parts are also added for both the rotor 2a and the stator 2b of the motor 2.

The rotor 2a of the motor 2 is attached to the fixed support shaft 8 of the grinding machine and the stator 2b is attached to the wheelhead 1. In this way, when the motor 2 is set in motion, the rotor 2a is kept stationary on the machine and the wheelhead 1 rotates with the stator 2b in respect of the rotor 2a. The encoder 3 is also housed in the wheelhead 1.

The hydraulic locking means include a lock cylinder 4 with a sealed hydraulic chamber 5, said lock cylinder 4 being attached to the support shaft 8, and a hydraulic circuit 6 for supplying oil to said hydraulic chamber 5. The locking of the wheelhead 1 in respect of the stator 2b is done by means of the supply of pressurised oil to said hydraulic chamber 5, thereby pressing the outer surface of the lock cylinder 4 on the inner surface of a sleeve 10 attached to the wheelhead 1.

The operating sequence of wheelhead 1 is as follows: the hydraulic lock means are deactivated by voiding the hydraulic chamber 5 of pressure, while the motor 2 is started at the same time. The motor 2, governed by the grinding machine numeric control, effects the rotation of the wheelhead 1 to the new position, being the encoder 3 what closes the positioning loop. After reaching the new position, the hydraulic locking means are actuated and the motor 2 is switched off.

In the embodiment of FIG.1, rotor 2a is attached to a support bushing 11, said support bushing being fixed to the support shaft 8 by way of the lock cylinder 4. Furthermore, the stator 2b is attached to a bearing carrier base bush 12, the wheelhead 1 is attached to the housing 9, the encoder 3 is fixed to said housing 9 and the sleeve 10 is also attached to said housing 9. The preloaded bearings 7a and 7b permit the rotation of the parts attached to the stator 2b in respect of the parts attached to the rotor 2a.

## Claims

1. A machine comprising:
a rotatable wheelhead (1) mounted on a support shaft (8);
a high torque motor (2) for rotating the wheelhead (1) relative to the support shaft (8); and
an encoder (3) for detecting the angular position of the wheelhead;
**characterized in that**:
the machine is a grinding machine;
the motor (2) comprises a rotor (2a) attached to the support shaft (8) and a stator (2b) attached to the wheelhead (1), with the stator (2b) surrounding the rotor (2a); and
the motor (2) and the encoder (3) are housed inside the wheelhead (1).

2. A grinding machine according to claim 1, **characterised in that** it also includes hydraulic locking means for locking the wheelhead (1) in its rotation in respect of the support shaft (8).

3. A grinding machine according to claim 2, **characterised in that** the hydraulic locking means comprise a lock cylinder (4) with a hydraulic chamber (5), said lock cylinder (4) being attached to the support shaft (8), and a hydraulic circuit (6) for supplying oil to said hydraulic chamber (5), the locking of the wheelhead (5) being effected when pressurised oil is supplied to said chamber (1), so that the outer surface of the lock cylinder (4) presses on the inner surface of a sleeve (10) attached to the wheelhead (1).

4. A grinding machine according to any of the preceding claims **characterised in that** the rotor (2a) is attached to the support shaft (8) by means of a support bush (11) .

5. A grinding machine according to any of the preceding claims **characterised in that** it includes a base bush (12) attached to the stator (2b), and a housing (9) attached to the stator (2b), to the wheelhead (1) and to said base bush (12), the encoder (3) being fixed to said housing (9).

6. A grinding machine according to any of the preceding claims, **characterised in that** it includes preloaded bearings (7a, 7b) between the parts attached to the rotor (2a) and the parts attached to the stator (2b).

## Patentansprüche

1. Maschine, umfassend:
einen drehbaren Schleifkopf (1), der auf einer Trägerwelle (8) befestigt ist;
einen Hochmomentmotor (2) für das Drehen des Schleifkopfes (1) relativ zur Trägerwelle (8); und
eine Codiereinrichtung (3) für das Feststellen der Winkelposition des Schleifkopfes,
**dadurch gekennzeichnet, dass**
die Maschine eine Schleifmaschine ist;
der Motor (2) einen Rotor (2a), der an der Trägerwelle (8) befestigt ist und einen Stator (2b), der am Schleifkopf (1) befestigt ist, umfasst, wobei der Stator (2b) den Rotor (2a) umgibt; und
der Motor (2) und die Codiereinrichtung (3) innerhalb des Schleifkopfes (1) untergebracht sind.

2. Schleifmaschine nach Anspruch 1, **dadurch gekennzeichnet, dass** sie ebenfalls eine hydraulische Arretiervorrichtung für das Arretieren des Schleifkopfes (1) in seiner Rotation in Bezug auf die Trägerwelle (8) einschließt.

3. Schleifmaschine nach Anspruch 2, **dadurch gekennzeichnet, dass** die hydraulische Arretiervorrichtung einen Schließzylinder (4) mit einer hydraulischen Kammer (5) umfasst, wobei der Schließzylinder (4) an der Trägerwelle (8) befestigt ist, und einen Hydraulikkreis (6) für die Zufuhr von Öl zur Hydraulikkammer (5), wobei die Arretierung des Schleifkopfes (1) erfolgt, wenn unter Druck stehendes Öl der Kammer (5) zugeführt wird, so dass die äußere Oberfläche des Schließzylinders (4) auf die innere Oberfläche einer Muffe (10) drückt, die am Schleifkopf (1) befestigt ist.

4. Schleifmaschine nach einem der vorangehenden Ansprüche, **dadurch gekennzeichnet, dass** der Rotor (2a) an der Trägerwelle (8) mit Hilfe einer Trägerbuchse (11) befestigt ist.

5. Schleifmaschine nach einem der vorangehenden Ansprüche, **dadurch gekennzeichnet, dass** sie eine Basisbuchse (12) einschließt, die am Stator (2b) befestigt ist, und ein Gehäuse (9), das am Rotor (2a), am Schleifkopf (1) und an der Basisbuchse (12) befestigt ist, wobei die Codiereinrichtung (3) am Gehäuse (9) befestigt ist.

6. Schleifmaschine nach einem der vorangehenden Ansprüche, **dadurch gekennzeichnet, dass** sie vorbelastete Lager (7a, 7b) zwischen den Teilen einschließt, die am Rotor (2a) befestigt sind, und den Teilen, die am Stator (2b) befestigt sind.

## Revendications

1. Machine comprenant :
une broche (1) rotative montée sur un arbre de support (8) ;
un moteur à couple élevé (2) pour faire tourner la broche (1) par rapport à l'arbre de support (8) ; et
un codeur (3) pour détecter la position angulaire de la broche ; **caractérisée en ce que** :
la machine est une rectifieuse ;
le moteur (2) comprend un rotor (2a) fixé à l'arbre de support (8) et un stator (2b) fixé à la broche (1), le stator (2b) entourant le rotor (2a) ; et
le moteur (2) et le codeur (3) sont logés à l'intérieur de la broche (1).

2. Rectifieuse selon la revendication 1, **caractérisée en ce qu'**elle comprend également des moyens de blocage hydrauliques pour bloquer la broche (1) dans sa rotation par rapport au bras de support (8).

3. Rectifieuse selon la revendication 2, **caractérisée en ce que** les moyens de blocage hydrauliques comprennent un cylindre de blocage (4) avec une chambre hydraulique (5), ledit cylindre de blocage (4) étant fixé à l'arbre de support (8) et un circuit hydraulique (6) pour acheminer de l'huile jusqu'à ladite chambre hydraulique (5), le blocage de la broche (1) étant effectué lorsque l'huile sous pression est acheminée jusqu'à ladite chambre (5), de manière à ce que la surface extérieure du cylindre de blocage (4) appuie sur la surface interne d'un manchon (10) fixé à la broche (1).

4. Rectifieuse selon l'une quelconque des revendications précédentes, **caractérisée en ce que** le rotor (2a) est fixé à l'arbre de support (8) au moyen d'une douille de support (11).

5. Rectifieuse selon l'une quelconque des revendications précédentes, **caractérisée en ce qu'**elle comprend une douille de base (12) fixée au stator (2b) et un boîtier (9) fixé au stator (2b), à la broche (1) et à ladite douille de base (12), le codeur (3) étant fixé audit boîtier (9).

6. Rectifieuse selon l'une quelconque des revendications précédentes, **caractérisée en ce qu'**elle comprend des paliers précontraints (7a, 7b) entre les pièces fixées sur le rotor (2a) et les pièces fixées sur le stator (2b).
